# EUROPÄISCHE PATENTSCHRIFT

(11) **EP 3 232 513 B1**
(45) Veröffentlichungstag und Bekanntmachung des Hinweises auf die Patenterteilung: **29.06.2022**
(21) Anmeldenummer: 17165766.1
(22) Anmeldetag: 10.04.2017
(51) Int. Cl.: H01R 4/38, H02G 13/00, H01R 4/64, H01R 4/34, H01R 4/66

(54) **SYSTEM ZUR AUSGLEICHUNG VON ELEKTRISCHEN POTENTIALGEFÄLLEN SOWIE POTENTIALAUSGLEICHSKLEMME HIERFÜR**
SYSTEM FOR BALANCING ELECTRICAL POTENTIAL GRADIENTS AND POTENTIAL EQUALISATION TERMINAL THEREFOR
SYSTÈME D'ÉQUILIBRAGE DE CHUTES DE POTENTIEL ÉLECTRIQUE ET BORNE DE MISE À LA TERRE ASSOCIÉE

(30) Priorität: 15.04.2016 DE 102016107055
(43) Veröffentlichungstag der Anmeldung: 18.10.2017
(73) Patentinhaber: R + R WILDEN GmbH, 53879 Euskirchen (DE)
(72) Erfinder: Ihl, Klaus, 51105 Köln (DE)
(74) Vertreter: Kasseck, Christoph

(56) Entgegenhaltungen:
- DE-A1- 10 211 764
- DE-A1-102004 013 324
- DE-A1-102004 063 668
- DE-A1-102012 206 593
- DE-A1-102013 216 561
- US-A- 5 636 306

## Beschreibung

Die Erfindung betrifft ein System zur Ausgleichung von elektrischen Potentialgefällen.

In DE 102 11 764 A1 ist ein System zur Ausgleichung von elektrischen Potentialgefällen beschrieben, wobei das System einen Hauptringleiter sowie Knotenpunkte aufweist. Die Knotenpunkte sind dazu ausgebildet, abzweigende elektrische Leiter mit dem Hauptringleiter zu verbinden. Der Hauptringleiter weist Leitungen auf, welche zueinander parallel verlaufen und als Hinleiter bzw. Rückleiter aufgefasst werden können.

In DE 10 2013 216 561 A1 sind Potentialausgleichsklemmen beschrieben, welche elektrische Leiter miteinander verbinden. Die Potentialausgleichsklemme kann insbesondere als Knotenpunkt der elektrischen Leiter aufgefasst werden.

Auch aus der Praxis sind Systeme zur Ausgleichung von elektrischen Potentialgefällen grundsätzlich bekannt. So ist für Gebäude vorgesehen, dass eine Haupterdungsschiene installiert wird, welche häufig über eine Anschlussfahne und einen Fundamenterder mit dem Erdreich verbunden ist. Von dieser Haupterdungsschiene zweigt eine Vielzahl an Kabeln sternförmig ab, welche die Haupterdungsschiene mit den verschiedenen elektrisch leitfähigen Einrichtungen des Gebäudes verbindet. Hierunter fallen beispielsweise Hauptstützen des Stahlbaus des Gebäudes oder auch fluidführende Elemente wie Gas-, Öl- oder Wasserleitungen. Im Falle von elektrischen Potentialausgleichssystemen für Werkhallen oder dergleichen werden insbesondere auch die Maschinen, Behälter und alle sonstigen größeren elektrisch leitfähigen Einrichtungen mit der Haupterdungsschiene verbunden.

Es wurde nun gefunden, dass die bisherigen elektrischen Potentialausgleichssysteme in vielen Fällen nicht ausreichend dimensioniert sind. Dies bedeutet, dass im Falle von, beispielsweise, Blitzeinschlägen trotz des Potentialausgleichsystems das elektrische Potentialgefälle an einigen kritischen Stellen so groß sein kann, dass entweder Maschinen bzw. Geräte beschädigt werden können oder aber es zu einem Funkenschlag kommen kann. Der Funkenschlag ist insbesondere in den Umgebungen fatal, in welchen mit explosionsfähigen Stoffen gearbeitet wird. Ein besonders hervorzuhebendes Beispiel stellt die chemische Industrie dar. Darüber hinaus können auch Fehlerströme, z. B. ein Erdschluss eines leistungsstarken Gerätes, die Stromtragfähigkeit von den bekannten herkömmlichen Potentialausgleichssystemen übersteigen und zu Beschädigungen bzw. Funkenschlag führen.

Dementsprechend liegt der Erfindung das technische Problem zugrunde, ein System zur Ausgleichung von elektrischen Potentialgefällen anzugeben, welches die Sicherheit, insbesondere bei Blitzeinschlägen, weiter erhöht. Ganz besonders liegt der Erfindung das technische Problem zugrunde, ein System zur Ausgleichung von elektrischen Potentialgefällen anzugeben, bei welchem ein Funkenschlag zuverlässig vermieden wird.

Zur Lösung diesen technischen Problems lehrt die Erfindung ein System nach Anspruch 1.

Der Ausdruck "Ringleiter" bzw. "Hauptringleiter" meint, dass ein elektrischer Leiter, beispielsweise in Form eines Kabels oder eines Metallseiles oder dergleichen, einen Ring bildet. Dieser Ring ist insbesondere nicht geometrisch, sondern elektrisch zu verstehen.

Der Erfindung liegt die Erkenntnis zugrunde, dass die Verwendung eines Ringleiters bezüglich der Vermeidung von elektrischen Potentialgefällen effektiver ist als eine entsprechend größere Dimensionierung der Leiterquerschnitte. Dabei ist zu betonen, dass der Vorteil des Ringleiters nicht in der geometrischen Form eines Ringes oder beispielsweise eine Rechteckes zu sehen ist. Der Vorteil der Ringleitung ist vor allem darin begründet, dass hierdurch ein Leitungsnetzwerk geschaffen wird, welches eine Vielzahl leistungsfähigen von Kurzschlusswegen für, z. B., Blitzströme oder Fehlerströme zur Verfügung stellt. Denn der Ringleiter wird in regelmäßigen Abständen mit Potentialausgleichsklemmen befestigt, welche Potentialausgleichsklemmen eine Vielzahl an Kurzschlussmöglichkeiten des Ringleiters zur Verfügung stellen. Dies gewährleistet eine große Anzahl an möglichen Stromentlastungspfaden, wodurch die Wahrscheinlichkeit der Beschädigung von Maschinen bzw. die Entstehung von Funkenschlägen deutlich verringert wird. Im Ergebnis bietet das erfindungsgemäße System zur Ausgleichung von elektrischen Potentialgefällen eine größere Sicherheit.

Es liegt im Rahmen der Erfindung, dass der Hauptringleiter mittels der Potentialausgleichsklemme an dem Knotenpunkt mechanisch befestigt ist. Vorteilhafterweise ist die Potentialausgleichsklemme so eingerichtet, dass eine Betätigung der Potentialausgleichsklemme zugleich einer elektrischen Kontaktierung sowie einer mechanischen Befestigung entspricht. Es ist zweckmäßig, wenn das System eine Mehrzahl an Knotenpunkten umfasst.

Gemäß einer ganz besonders bevorzugten Ausführungsform umfasst der Hauptringleiter ein durchgehendes und bevorzugt lediglich ein durchgehendes Metallseil. Das Metallseil des Hauptringleiters weist vorzugsweise eine Mehrzahl an Drähten auf, wobei die Drähte zweckmäßigerweise Kupfer enthalten und vorteilhafterweise verzinnt sind. Das Metallseil des Hauptringleiters weist einen Durchmesser von wenigstens 6 mm, vorzugsweise von wenigstens 8 mm und besonders vorzugsweise von wenigstens 9 mm auf. Es ist zweckmäßig, dass das Metallseil des Hauptringleiters einen Durchmesser von höchstens 30 mm hat. Die wirksame Querschnittsfläche des Metallseiles des Hauptringleiters beträgt wenigstens 25 mm², vorteilhafterweise wenigstens 40 mm² und besonders vorteilhafterweise wenigstens 50 mm².

Es ist zweckmäßig, wenn der Abschnitt der halben Länge des Hauptringleiters beträgt, so dass der Hinleiter und der Rückleiter durchgängig zueinander parallel ausgerichtet sind. Es liegt im Rahmen der Erfindung, dass der Hauptringleiter von einem Kabeltragsystem, beispielsweise eine Gitter- oder Profilkabelbahn, gehalten wird.

Gemäß einer besonders bevorzugten Ausführungsform ist der Hauptringleiter mit einem Hauptpotentialausgleichsleiter des Gebäudes verbunden. Unter dem Ausdruck "Hauptpotentialausgleichsleiter" werden insbesondere Hauptpotentialausgleichsschienen bzw. Haupterdungsschienen verstanden. Vorzugsweise umfasst der Hauptringleiter ein metallenes Anschlussteil zwecks Schließung des Ringes des Hauptringleiters. Das Anschlussteil ist vorteilhafterweise mit dem Metallseil des Haupringleiters über eine Klemme und vorzugsweise über eine Potentialausgleichsklemme und besonders bevorzugt über eine erfindungsgemäße Potentialausgleichsklemme verbunden. Das Anschlussteil umfasst zweckmäßigerweise eine Platte oder ein Profil.

Besonders vorzugsweise ist der Hauptringleiter über den Knotenpunkt bzw. über wenigstens einen der Knotenpunkte mit wenigstens einem Ableiter verbunden, welcher Ableiter den Hauptringleiter, vorzugsweise über elektrisch leitende Elemente des Gebäudes, elektrisch mit Erdreich verbindet. Die Begrifflichkeit "elektrisch leitende Elemente des Gebäudes" umfasst insbesondere ein Stahlskelett des Gebäudes und/oder eine Blitzschutzeinrichtung des Gebäudes. Besonders vorzugsweise ist der Ableiter mit Hauptstützen des Stahlskeletts des Gebäudes verbunden. Es ist vorteilhaft, wenn der Hauptringleiter über den Knotenpunkt bzw. über wenigstens einen der Knotenpunkte mit elektrisch leitfähigen Einrichtungen verbunden ist. Der Ausdruck "elektrisch leitfähige Einrichtung" meint insbesondere Maschinen/Geräte und/oder Fluidführungselemente. Der Knotenpunkt ist vorzugsweise über eine Potentialausgleichsklemme und sehr bevorzugt über eine erfindungsgemäße Potentialausgleichsklemme mit dem Hauptringleiter verbindbar. Der Knotenpunkt umfasst vorteilhafterweise einen metallene Platte oder ein metallenes Profil. Es ist zweckmäßig, wenn der Knotenpunkt mehrere Aussparungen aufweist zwecks Verbindung mit abzweigenden elektrischen Leitern. Zum Zwecke der besseren Zuordnung und Dokumentation sind die Aussparungen hilfreicherweise mit Symbolen versehen.

Es ist bevorzugt, dass das System wenigstens zwei und vorzugsweise drei Hierarchieebenen von Potentialausgleichsleitern aufweist, wobei die erste Hierarchieebene den Hauptringleiter umfasst und wobei die zweite Hierarchieebene die abzweigenden elektrischen Leiter enthält. Die abzweigenden elektrischen Leiter können unmittelbar zu elektrisch leitfähigen Einrichtungen führen, so dass in diesem Fall zwei Hierarchieebenen vorliegen. Eine oder mehrere abzweigende elektrische Leitungen können aber auch ohne unmittelbare Kontaktierung zu elektrisch leitfähigen Einrichtungen vorliegen und damit Stichbahnen sein, indem von diesen Stichbahnen weitere elektrische Leitungen abzweigen. Die Stichbahnen stellen somit eine mittlere Hierarchieebene dar und können bevorzugt über Knotenpunkte bzw. über die Knotenpunkte mit dem Hauptringleiter sowie vorteilhafterweise auch mit den abzweigenden elektrischen Leitern verbunden werden. Die Stichbahn umfasst bevorzugt ein Metallseil, welches Metallseil zweckmäßigerweise eine wirksame Querschnittsfläche von wenigstens 20 mm², vorzugsweise von wenigstens 25 mm² und besonders vorzugsweise von wenigstens 30 mm² aufweist. Das Metallseil der Stichbahn sowie der Knotenpunkt bilden bevorzugt einen Nebenringleiter.

Vorzugsweise umfasst die Erfindung ferner eine Potentialausgleichsklemme zur Verbindung eines Ringleiters mit einem Knotenpunkt, insbesondere zum Aufbau eines erfindungsgemäßen Systems, wobei die Potentialausgleichsklemme ein Bodenteil aufweist, wobei das Bodenteil ein Profil ist, wobei das Bodenteil einen Boden und zwei einander gegenüberliegende Seitenwände aufweist, wobei der Boden die beiden gegenüberliegenden Seitenwände miteinander verbindet, wobei jede der beiden gegenüberliegenden Seitenwände wenigstens eine Einkerbung aufweist, wobei die Einkerbungen als Wandurchgänge ausgestaltet sind.

Eine solcherart ausgebildete Potentialausgleichsklemme ermöglicht eine sehr gute Kraftübertragung auf Ringleiter, wodurch eine besonders gute elektrische Kontaktierung und zugleich auch eine sehr gute mechanische Befestigung erzielt wird. Dabei ist die Potentialausgleichsklemme in dem System zur Ausgleichung von elektrischen Potentialgefällen eine kritische Stelle, da hier die Übergangswiderstände am größten sind. Die erfindungsgemäße Konstruktion der Potentialausgleichsklemme konnte die Übergangswiderstände soweit verringern, dass ein Funkenschlag zuverlässig vermieden wird.

Es liegt im Rahmen der Erfindung, dass die Seitenwände je zwei Einkerbungen aufweisen. Vorzugsweise werden die Einkerbungen durch einen Halbkreis abgeschlossen. Das Bodenteil ist vorteilhafterweise elektrisch leitfähig und vorzugsweise aus Metall. Es ist zweckmäßig, wenn die Potentialausgleichsklemme ein Befestigungsteil zur Befestigung der Potentialausgleichsklemme an einem Kabeltragsystem umfasst.

Es ist vorteilhaft, wenn die Einkerbungen einander gegenüberliegen, wobei die Einkerbungen vorzugsweise fluchtend zueinander ausgerichtet sind. Vorzugsweise weist jede Seitenwand zwei Einkerbungen auf, wobei weiter vorzugsweise die vier Einkerbungen einander paarweise gegenüberliegen, wobei bevorzugt die beiden Einkerbungen jedes Paares zueinander fluchtend ausgerichtet sind. Praktischerweise sind die Einkerbungen zum Boden hin oder von dem Boden fort gerichtet. Die Potentialausgleichsklemme ist vorteilhafterweise so eingerichtet, dass die Klemmkraft in Einkerbungsrichtung wirkt. Die Einkerbungen sind in Längsrichtung des Profils bevorzugt wenigstens 3 mm, weiter bevorzugt wenigstens 4 mm und besonders bevorzugt wenigstens 5 mm breit. Dabei ist es hilfreich, dass die Einkerbungen wenigstens eine Fase zur besseren Einführbarkeit von elektrischen Leitern aufweisen.

Es liegt im Rahmen der Erfindung, dass das Bodenteil ein U-Profil ist. Vorzugsweise verbindet der Boden je eine Kante der beiden gegenüberliegenden Seitenwände miteinander. Die beiden gegenüberliegenden Seitenwände sind zweckmäßigerweise zueinander parallel bzw. im Wesentlichen zueinander parallel ausgerichtet. Vorteilhafterweise ist der Boden lediglich flächig ausgebildet.

Gemäß einer besonders bevorzugten Ausführungsform umfasst die Potentialausgleichsklemme ein Deckenteil, wobei eine Wand des Deckenteils zum Boden hin gewandt ist und eine Decke bildet, wobei der Boden eine Aussparung und die Decke eine Öffnung umfasst, wobei eine Schraube durch die Aussparung und die Öffnung führbar ist und wobei mit der Schraube und einer ersten Mutter das Bodenteil mit dem Deckenteil zusammenklemmbar ist. Vorteilhafterweise ist das Deckenteil elektrisch leitfähig und bevorzugt aus Metall. Es ist zweckmäßig, dass die Decke parallel bzw. im Wesentlichen parallel zum Boden angeordnet ist. Gemäß einer bevorzugten Ausführungsform ist die erste Mutter eine selbstsichernde Mutter, wobei weiter bevorzugt die selbstsichernde Mutter ein Klemmteil aus Kunststoff umfasst.

Es ist bevorzugt, dass das Deckenteil ein Profil und vorzugsweise ein U-Profil ist und zwei einander gegenüberliegende Flankenwände aufweist, welche Flankenwände durch die Decke miteinander verbunden sind. Zweckmäßigerweise verbindet die Decke je eine Kante der beiden gegenüberliegenden Flankenwände miteinander, wobei die beiden gegenüberliegenden Flankenwände vorteilhafterweise zueinander parallel bzw. im Wesentlichen zueinander parallel ausgerichtet sind. Praktischerweise ist die Decke lediglich flächig ausgebildet. Gemäß einer besonders bevorzugten Ausführungsform werden die Flankenwände des Deckenteiles von den Seitenwänden des Bodenteiles umschlossen. Gemäß einer anderen Ausführungsform werden die Seitenwände des Bodenteiles von den Flankenwänden des Deckenteiles umschlossen. Besonders vorzugsweise liegen die Seitenwände an den Flankenwänden an.

Gemäß einer besonders bevorzugten Ausführungsform weist jede Flankenwand wenigstens eine Ausnehmung und bevorzugt zwei Ausnehmungen auf, wobei die Ausnehmungen jeweils einer Einkerbung zuordenbar sind. Vorteilhafterweise verläuft die Ausnehmungsrichtung der Ausnehmungen entgegengesetzt zur Einkerbungsrichtung. Vorzugsweise werden die Ausnehmungen durch einen Halbkreis abgeschlossen. Es ist zweckmäßig, dass die Ausnehmungen wenigstens eine Fase zur besseren Einführbarkeit eines elektrischen Leiters aufweisen. Die Ausnehmungen sind in Längsrichtung des Profils bevorzugt wenigstens 3 mm, weiter bevorzugt wenigstens 4 mm und besonders bevorzugt wenigstens 5 mm breit. Zweckmäßigerweise sind die Ausnehmungen zur Decke hin oder von der Decke fort gerichtet, wobei die Potentialausgleichsklemme vorteilhafterweise so eingerichtet ist, dass die Klemmkraft in Ausnehmungsrichtung wirkt.

Nachfolgend wird die Erfindung anhand einer lediglich ein Ausführungsbeispiel darstellenden Zeichnung näher erläutert. Es zeigen in schematischer Darstellung:
- Fig. 1: ein Blockdiagramm eines erfindungsgemäßen Systems zur Ausgleichung von elektrischen Potentialgefällen,
- Fig. 2: eine Seitenansicht eines Teils des Systems aus Fig. 1,
- Fig. 3: eine Explosionsdarstellung einer erfindungsgemäßen Potentialausgleichsklemme,
- Fig. 4: eine perspektivische Darstellung eines Befestigungsteiles des Systems aus den Fig. 1 und 2 und
- Fig. 5: einen Knotenpunkt in perspektivischer Darstellung des Systems aus den Fig. 1 und 2.

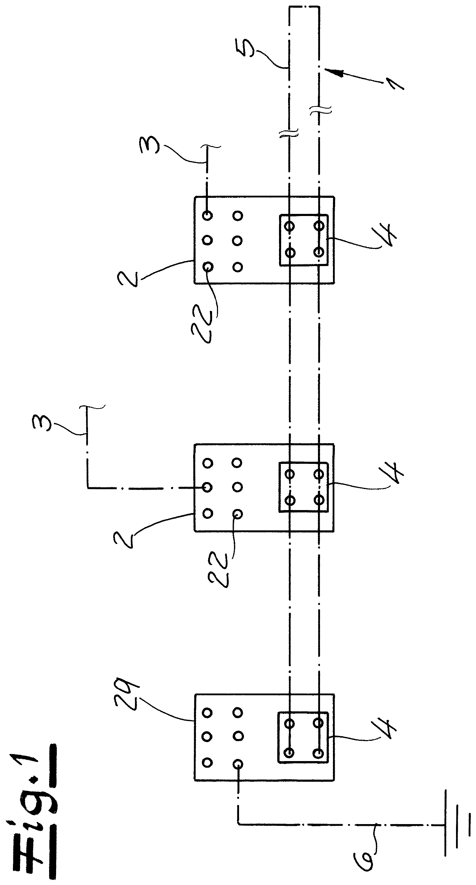

In Fig. 1 ist das erfindungsgemäße System zur Ausgleichung von elektrischen Potentialgefällen mit Hilfe eines Blockdiagramms schematisch veranschaulicht. Das System ist wenigstens teilweise in einem Gebäude angeordnet und umfasst einen Hauptringleiter 1 sowie mehrere Knotenpunkte 2. Die Knotenpunkte 2 sind in diesem Ausführungsbeispiel Metallplatten, welche in einem oberen Bereich jeweils mehrere Ausnehmungen 22 zur Verbindung mit Kabelschuhen von abzweigenden Leitern 3 aufweisen. In einem unteren Bereich der Knotenpunkte 2 ist jeweils eine Potentialausgleichsklemme 4 befestigt.

Der Hauptringleiter 1 umfasst ein Metallseil 5, wobei die beiden Enden des Metallseiles 5 bei einem vorzugsweise plattenförmig ausgebildeten Anschlussteil 29 zusammenlaufen. Auch an dem Anschlussteil 29 ist eine Potentialausgleichsklemme 4 befestigt, wobei das Anschlussteil 29 mit einem HauptPotentialausgleichsleiter 6 in Form einer Haupterdungsschiene des Gebäudes elektrisch leitend verbunden ist. Die Potentialausgleichsklemmen 4 sind so ausgestaltet, dass ein Hinleiter und ein Rückleiter des Hauptringleiters 1 reversibel in den Potentialausgleichsklemmen 4 eingeklemmt werden. Die Einklemmung des Hauptringleiters 1 dient dabei zugleich der mechanischen Befestigung als auch der elektrischen Kontaktierung bezüglich der Knotenpunkte 2.

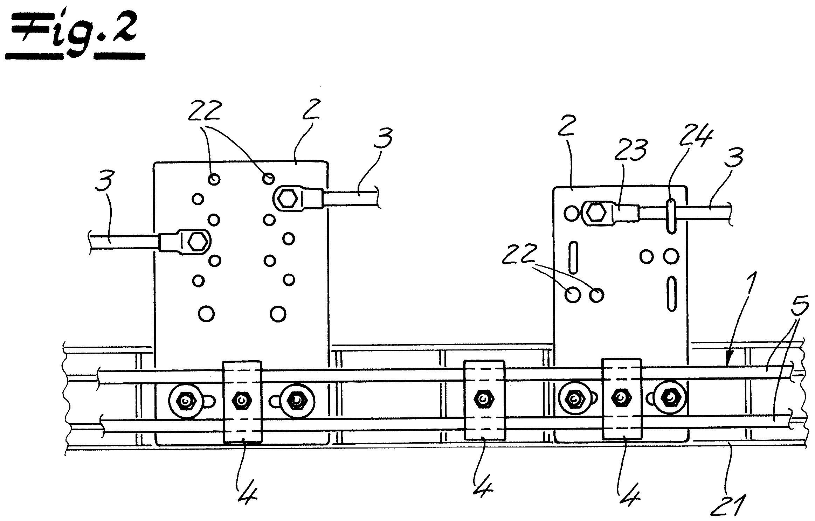

In Fig. 2 sind die zwei Knotenpunkte 2 aus Fig. 1 mitsamt einem Kabeltragsystem 21 in Form einer Gitterkabelbahn sowie mit dem Hauptringleiter 1 und einer weiteren Potentialausgleichsklemme 4 abgebildet. Dabei weist der rechte Knotenpunkt etwas größer dimensionierte Ausnehmungen 22 auf als der linke Knotenpunkt 2. Ferner ist an dem rechten Knotenpunkt 2 ein montierter Kabelschuh 23 ersichtlich, in welchen ein beispielhafter abzweigender elektrischer Leiter 3 eingeschoben ist. Mithilfe von Zugentlastungen 24 können die abzweigenden elektrischen Leiter 3 besonders sicher an den Knotenpunkten 2 befestigt werden. Hierdurch ist der rechte Knotenpunkt 2 für etwas größere und damit leistungsfähigere elektrische Leiter ausgelegt. Diese abzweigenden elektrischen Leiter verbinden den rechten Knotenpunkt 2 beispielsweise mit Hauptstützen eines Stahlbaus des Gebäudes. Ebenso kann von diesem rechten Knotenpunkt 2 eine Stichbahn ausgehen, welche ihrerseits ein Metallseil aufweist und welche ebenfalls als Ringleiter ausgebildet ist. Der linke Knotenpunkt 2 aus der Fig. 2 weist eine Reihe kleinerer Ausnehmungen im oberen Bereich auf, welche für entsprechend kleiner dimensionierte abzweigende elektrische Leiter 3 ausgelegt sind. Der linke Knotenpunkt 2 ist beispielsweise für die Verbindung des Hauptringleiters 1 mit Maschinen, Anlagen oder Geräten geeignet.

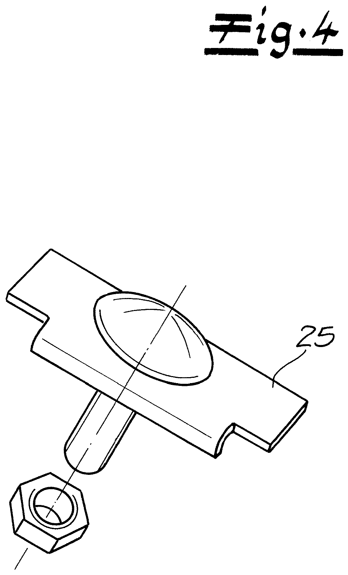

In Fig. 2 ist ferner ersichtlich, dass der Hauptringleiter 1 über die mittlere Potentialausgleichsklemme 4 mit dem Kabeltragsystem 21 mechanisch verbunden wird. Darüber hinaus sind die Befestigungsmittel zur Befestigung der Knotenpunkte 2 an dem Kabeltragsystem 21 an den Schraubverbindungen links und rechts der Potentialausgleichsklemmen 4 zu erahnen. Diese Befestigungsmittel umfassen insbesondere ein in Fig. 4 dargestelltes Klemmelement 25, welches an der Rückseite der Knotenpunkte 2 angeordnet wird. Dabei entspricht die Länge der in Fig. 4 dargestellten gebogenen Kanten des Klemmelementes 25 gerade dem Abstand zweier Gitterstangen. Bei Anziehen der Schraubverbindung werden die zwei Gitterstangen an die Rückseite des Knotenpunktes 2 gepresst, wodurch eine sichere Befestigung des Knotenpunktes 2 an dem Kabeltragsystem 21 erreicht wird.

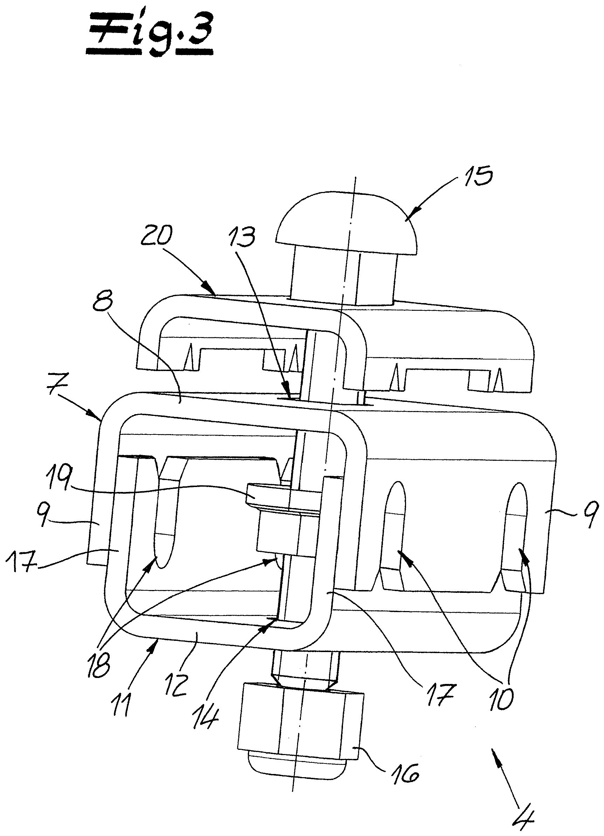

In Fig. 3 ist die Potentialausgleichsklemme 4 in einer Explosionsdarstellung verdeutlicht. Die Potentialausgleichsklemme 4 weist ein Bodenteil 7 mit einem Boden 8 und zwei Seitenwänden 9 auf. Beide Seitenwände 9 haben jeweils zwei Einkerbungen 10, wobei sich die Einkerbungen 10 jeweils paarweise gegenüberliegen. Jede Einkerbung 10 weist eine Fase zur besseren Einführbarkeit von Metallseilen sowie einen die Einkerbung abschließenden Halbkreis zur optimalen Kontaktierung des Metallseiles auf. Ferner umfasst die Potentialausgleichsklemme 4 ein Deckenteil 11 mit einer Decke 12 sowie mit zwei Flankenwänden 17. Das Deckenteil 11 ist ebenfalls als U-Profil ausgebildet und umfasst an seinen beiden Flankenwänden 17 jeweils zwei Ausnehmungen 18. Die Ausnehmungen 18 sind den Einkerbungen 10 zugeordnet und weisen gleichermaßen jeweils eine Fase und einen Halbkreis auf. Das Deckenteil 11 ist so ausgerichtet, dass die Flankenwände 17 in Richtung des Bodens 8 zeigen und die Einkerbungsrichtung der Einkerbungen 10 antiparallel zu der Ausnehmungsrichtung der Ausnehmungen 18 verläuft.

Sowohl der Boden 8 als auch die Decke 12 weisen eine Aussparung 13 bzw. eine Öffnung 14 auf, durch welche eine Schraube 15, vorzugsweise eine Schlossschraube, führbar ist. Dabei ist der Kopf der Schlossschraube dem Bodenteil 7 zugeordnet. Mit einer ersten Mutter 16 kann dann eine Klemmkraft aufgebracht werden, welche das Bodenteil 7 und das Deckenteil 11 zusammenpresst. Eine zweite Mutter 19, vorzugsweise mit Bund, ist zwischen dem Boden 8 und der Decke 12 angeordnet.

Ferner umfasst die erfindungsgemäße Potentialausgleichsklemme 4 optional auch noch ein Befestigungsteil 20, welches so ausgebildet ist, dass es das Bodenteil 7 an dem Kabeltragsystem 21 befestigt. Eine solche Potentialausgleichsklemme 4 entspricht der mittleren Potentialausgleichsklemme 4 aus Fig. 2. In dem vorliegenden Ausführungsbeispiel ist das Befestigungsteil 20 ausgebildet, um an einer Gitterkabelbahn befestigt zu werden. Hierzu sind V-förmige Nuten vorgesehen, wobei mithilfe einer zweiten Mutter 19 jeweils ein Paar Nuten eine Gitterstange einklemmt und an den Boden 8 presst. Im Falle der Verwendung der Potentialausgleichsklemme an einem Knotenpunkt 2 ist das Befestigungsmittel 20 nicht erforderlich; allenfalls ein nicht dargestelltes Ausgleichselement wird benötigt.

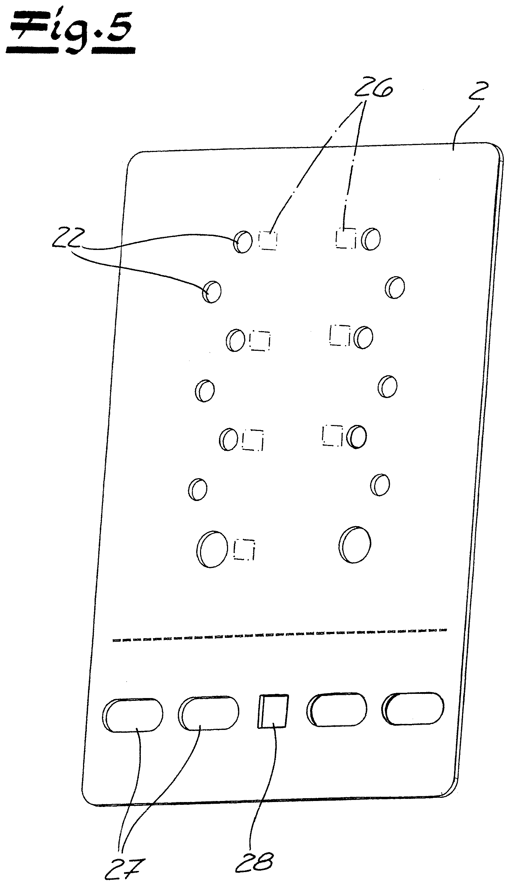

In Fig. 5 ist der linke Knotenpunkt 2 aus Fig. 2 perspektivisch dargestellt. Den Ausnehmungen 22 sind Symbolfelder 26 zugeordnet, wobei die Symbolfelder 26 beispielsweise eine eingeprägte Zahl aufweisen. Die Zahlen ermöglichen eine bessere Zuordnung bzw. Dokumentation der Leitungsverläufe. Vorteilhafterweise weist der Knotenpunkt 2 Ausnehmungen 22 mit unterschiedlichen Dimensionierungen auf, um unterschiedlichen Anforderungen an die elektrischen Leiter gerecht zu werden. In einem unteren Bereich weist der Knotenpunkt 2 Langlöcher 27 auf. Die Langlöcher 27 werden für die bereits zu Fig. 2 beschriebenen Schraubverbindungen im Zusammenspiel mit dem Klemmelement 25 aus Fig. 4 benötigt. Schließlich enthält der Knotenpunkt 2 im unteren Bereich noch eine vorzugsweise quadratische Öffnung 28, durch welche die Schlossschraube 15 aus Fig. 3 geschoben wird.

## Patentansprüche

1. System zur Ausgleichung von elektrischen Potentialgefällen, insbesondere zur Ausgleichung von elektrischen Potentialgefällen bei Blitzeinschlag, wobei zumindest ein Teil des Systems in einem Gebäude anordnbar ist, wobei das System einen Hauptringleiter (1) sowie wenigstens einen Knotenpunkt (2) aufweist, wobei der Knotenpunkt (2) dazu ausgebildet ist, abzweigende elektrische Leiter (3) mit dem Hauptringleiter (1) zu verbinden, wobei der Hauptringleiter (1) durch eine Potentialausgleichsklemme (4) mit dem Knotenpunkt (2) elektrisch verbunden ist, wobei ein Hinleiter und ein Rückleiter des Hauptringleiters (1) wenigstens entlang eines Abschnittes zueinander parallel verlaufen,
**dadurch gekennzeichnet, dass**
der Abstand zwischen dem Hinleiter und dem Rückleiter entlang des Abschnittes wenigstens streckenweise durch die Potentialausgleichsklemme (4) bestimmt wird, wobei der Abschnitt wenigstens ein Drittel der halben Länge des Hauptringleiters (1) beträgt.

2. System nach Anspruch 1, wobei der Hauptringleiter (1) lediglich ein durchgehendes Metallseil (5) umfasst.

3. System nach einem der Ansprüche 1 oder 2, wobei der Hauptringleiter (1) mit einem Hauptpotentialausgleichsleiter (6) des Gebäudes verbindbar ist.

4. System nach einem der Ansprüche 1 bis 3, wobei der Hauptringleiter (1) über den Knotenpunkt (2) bzw. über wenigstens einen der Knotenpunkte (2) mit wenigstens einem Ableiter verbunden ist, welcher Ableiter dazu eingerichtet ist, den Hauptringleiter (1) elektrisch mit Erdreich zu verbinden.

5. System nach einem der Ansprüche 1 bis 4, wobei das System wenigstens zwei Hierarchieebenen von Potentialausgleichsleitern aufweist, wobei die erste Hierarchieebene den Hauptringleiter (1) umfasst und wobei die zweite Hierarchieebene die abzweigenden elektrischen Leiter (3) enthält.

## Claims

1. System for equalizing electric potential gradients, in particular for equalizing electric potential gradients in the event of lightning strike, wherein at least a part of the system can be arranged in a building, wherein the system has a main ring conductor (1) and at least one node (2), wherein the node (2) is designed to connect branching electrical conductors (3) to the main ring conductor (1), wherein the main ring conductor (1) is electrically connected to the node (2) by an equipotential bonding terminal (4), wherein a forward conductor and a return conductor of the main ring conductor (1) extend parallel to each other at least along a section,
**characterized in that**
the distance between the forward conductor and the return conductor along the section is determined at least in segments by the equipotential bonding terminal (4), wherein the section is equal to at least one third of half the length of the main ring conductor (1).

2. System according to Claim 1, wherein the main ring conductor (1) only comprises one continuous metal cable (5) .

3. System according to either of Claims 1 or 2, wherein the main ring conductor (1) can be connected to a main equipotential bonding conductor (6) of the building.

4. System according to any one of Claims 1 to 3, wherein the main ring conductor (1) is connected via the node (2) or via at least one of the nodes (2) to at least one arrester, which arrester is configured to connect the main ring conductor (1) electrically to earth.

5. System according to any one of Claims 1 to 4, wherein the system includes at least two hierarchical levels of equipotential bonding conductors, wherein the first hierarchical level comprises the main ring conductor (1), and wherein the second hierarchical level contains the branching electrical conductors (3).

## Revendications

1. Système de compensation de chutes de potentiel électriques, en particulier de compensation de chutes de potentiel électriques en cas de coup de foudre, sachant qu'au moins une partie du système peut être disposé dans un bâtiment, sachant que le système comporte un conducteur cadre principal (1) ainsi qu'au moins un point nodal (2), sachant que le point nodal (2) est constitué pour relier des conducteurs électriques de dérivation (3) au conducteur cadre principal (1), sachant que le conducteur cadre principal (1) est électriquement relié par une borne d'équipotentialité (4) au point nodal (2), sachant qu'un conducteur d'arrivée et un conducteur de retour du conducteur cadre principal (1) passent au moins parallèlement l'un à l'autre le long d'un section,
**caractérisé en ce que**
l'intervalle entre le conducteur d'arrivée et le conducteur de retour le long de la section est déterminée au moins par tronçons par la borne d'équipotentialité (4), sachant que la section représente au moins un tiers de la demie longueur du conducteur cadre principal (1).

2. Système selon la revendication 1, sachant que le conducteur cadre principal (1) ne comprend qu'un câble métallique continu (5).

3. Système selon l'une quelconque des revendications 1 ou 2, sachant que le conducteur cadre principal (1) peut être relié à un conducteur d'équipotentialité principal (6) du bâtiment.

4. Système selon l'une quelconque des revendications 1 à 3, sachant que le conducteur cadre principal (1) est relié par le point nodal (2) ou par au moins un des points nodaux (2) à au moins un parafoudre, lequel parafoudre est agencé pour relier électriquement le conducteur cadre principal (1) à la terre.

5. Système selon l'une quelconque des revendications 1 à 4, sachant que le système comporte au moins deux niveaux hiérarchiques de conducteurs d'équipotentialité, sachant que le premier niveau hiérarchique comprend le conducteur cadre principal (1) et sachant que le deuxième niveau hiérarchique contient le conducteur électrique de dérivation (3).
